# FASCICULE DE BREVET EUROPEEN

(11) **EP 2 545 256 B1**
(45) Date de publication et mention de la délivrance du brevet: **25.01.2017**
(21) Numéro de dépôt: 11712992.4
(22) Date de dépôt: 11.03.2011
(51) Int. Cl.: F01K 13/02, F23L 7/00, F25J 3/04, F23J 15/00, F01K 15/00, F23N 3/00, F25J 3/02

(54) **PROCEDE DE GENERATION D'ELECTRICITE METTANT EN OEUVRE UNE UNITE DE SEPARATION DES GAZ DE L'AIR ET UNE UNITE DE COMBUSTION**
STROMERZEUGUNGSVERFAHREN MIT EINER GAS-/LUFTTRENNEINHEIT UND EINER VERBRENNUNGSEINHEIT
ELECTRICITY GENERATION METHOD USING A GAS/AIR SEPARATION UNIT AND A COMBUSTION UNIT

(30) Priorité: 11.03.2010 FR 1051755
(43) Date de publication de la demande: 16.01.2013
(73) Titulaire: L'Air Liquide Société Anonyme pour l'Etude et l'Exploitation des Procédés Georges Claude, 75007 Paris (FR)
(72) Inventeur: ALLARD, Nicolas, F-93500 Pantin (FR); GUILLARD, Alain, F-75016 Paris (FR)
(74) Mandataire: Mercey, Fiona Susan
(86) Numéro de dépôt international: PCT/FR2011/050495
(87) Numéro de publication internationale: WO 2011/110792

(56) Documents cités:
- EP-A1- 1 959 193
- EP-A2- 2 224 165
- WO-A1-99/40304
- WO-A2-2010/072729
- US-A1- 2007 034 704

## Description

La présente invention concerne un procédé de génération d'électricité mettant en oeuvre une unité de séparation des gaz de l'air, une unité de combustion fonctionnant soit à l'air, soit à un comburant plus pauvre en azote que l'air, ce comburant issu de l'unité de séparation des gaz de l'air et produisant des fumées de combustion, et une unité de compression et/ou de purification du CO₂ issu des fumées de combustion produites par l'unité de combustion.

Les changements climatiques constituent l'un des plus grands défis environnementaux. L'accroissement de la concentration en dioxyde de carbone dans l'atmosphère est en très grande partie la cause du réchauffement global. Le CO₂ d'origine humaine est essentiellement émis dans l'atmosphère par la combustion des combustibles fossiles dans les centrales énergétiques.

Pour lutter contre les émissions de CO₂, une technologie vise à capturer le CO₂ émis lors de la combustion de combustibles carbonés pour le séquestrer sous terre. L'une des contraintes posées est la séparation du CO₂ dans les fumées où sa fraction ne dépasse traditionnellement pas 15%, ce qui induit des énergies de séparation importantes.

Une possibilité consiste à séparer l'azote de l'air en amont de la combustion, il ne reste alors à la sortie de la chaudière quasiment plus que du CO₂ et de l'eau, les produits de la combustion. La chaudière fonctionne alors à l'oxycombustion. On peut recycler une partie des fumées (essentiellement du CO₂) avec l'oxygène pour éviter d'atteindre des températures trop élevées dans la chaudière. La capture du CO₂ est donc assurée à moindre coût.

Cette technique est prometteuse, tant du point de vue de l'investissement que de l'efficacité énergétique globale.

Les producteurs d'électricité disposent divers moyens de production plus ou moins coûteux à opérer, par exemple les éoliennes, les centrales nucléaires....et évidemment les centrales à combustion de combustibles carbonés (CCCC). Or les CCCC sont relativement coûteuses à opérer. Selon la présente invention, le fonctionnement du procédé de production d'électricité varie selon le prix de vente d'électricité générée par la CCCC.

Egalement en fonction de ce prix de vente, le producteur d'électricité peut décider de capturer tout ou une partie du CO₂ émis par la CCCC, voire de ne pas la capturer.

La capture partielle du CO₂ n'est pas très adaptée pour la technologie de l'oxycombustion. Effectivement, il faut opérer à 100% en oxycombustion ou à l'air, mais il est difficile de s'écarter de ces régimes. En effet, s'il y a plus de 30% d'azote dans les fumées, la séparation du CO₂ perd tous les avantages que l'on obtient lorsque le flux est plus concentré.

Ainsi, la solution de référence pour une capture partielle serait d'investir à 100% l'appareil de séparation d'air (ASU) et de l'opérer à 100% de ses capacités. On peut cependant n'investir qu'une part de l'unité de compression et de séchage (ou l'investir à 100% mais ne l'opérer qu'à hauteur du CO₂ que l'on souhaite capturer). Malheureusement, cette unité de compression et de séchage ne représente qu'une faible part de l'investissement et de l'énergie auto-consommée, contrairement à l'ASU.

D'autre part, opérer avec une ASU à 100% de ses capacités signifie une consommation d'une quantité constante d'énergie dans le temps, ce qui ne permet pas une adaptation aux variations de coût et de débit de l'énergie disponible.

Partant de là, un problème qui se pose est de proposer un procédé de production d'électricité qui permet de produire l'électricité d'une manière plus rentable que celle déjà connue.

Si à un instant donné, le prix de l'électricité est très élevé, ceci veut dire que le coût marginal de production devient très élevé. Si ce coût devient très élevé, le réseau de fourniture d'électricité peut être amené à faire appel à des moyens de production de dernier recours. Ceux-ci (par exemple un groupe diesel/fuel, un cycle ouvert à gaz) ont une efficacité très dégradée et des facteurs d'émissions de CO₂ souvent très élevés. Ces facteurs d'émissions sont même souvent plus élevés que ceux de la centrale à oxycombustion fonctionnant en mode dégradé en étant alimenté par l'air et sans séquestration de CO₂.

Ainsi selon l'invention, il est préconisé de produire de l'électricité en utilisant une centrale à oxycombustion, même en rejetant du CO₂ à l'atmosphère, sans le traiter, puisqu'à l'échelle globale, les émissions de CO₂ seront inférieures à celles des moyens de production de dernier recours. Donc le fait d'émettre plus de CO₂ sur la centrale à oxycombustion quand l'électricité est très chère permet à l'échelle du réseau de réduire les émissions de CO₂ par rapport à celles de l'art antérieur.

EP-A-1959193 décrit un procédé selon le préambule de la revendication 1.

Selon un objet de l'invention il est prévu un procédé selon la revendication 1. Le prix de mise de l'air des fumées correspond à une taxe carbone qui est demandé quand on rejette un gaz contenant du dioxyde de carbone à l'atmosphère.

Quand il est dit que pendant le fonctionnement à l'air, aucun fluide enrichi en oxygène de l'unité de production est envoyé à la chaudière, ceci n'exclut pas la possibilité qu'un petit débit enrichi en oxygène, représentant au plus 5% du débit d'air puisse être envoyé à la chaudière.

La notion de fonctionnement à l'air n'exclut pas non plus la possibilité que l'unité de combustion puisse recevoir d'autres comburants de sources autre que l'unité de production de gaz de l'air, par exemple une partie des fumées. De même la notion de fonctionnement à l'oxygène n'exclut pas la possibilité que l'unité de combustion puisse recevoir d'autres comburants de sources autre que l'unité de production de gaz de l'air.

Selon d'autres caractéristiques facultatives :
- si le prix de vente de l'électricité dépasse le premier seuil, on réduit, éventuellement à zéro, la quantité d'air envoyée à l'unité de séparation des gaz de l'air et/ou la quantité de comburant envoyée de l'unité de séparation et l'unité de combustion est alimentée à l'air, ne recevant plus de comburant plus pauvre en azote et plus riche en oxygène que l'air.
- on augmente, éventuellement à partir de zéro, la quantité d'air envoyée à l'unité de combustion si le prix de vente de l'électricité est supérieur à un quatrième seuil, qui peut être inférieur, égal ou supérieur au premier seuil, le cas échéant.
- l'unité de combustion fonctionne uniquement à l'air si le prix de vente d'électricité dépasse le premier seuil et éventuellement uniquement au comburant plus pauvre en azote que l'air si le prix de vente d'électricité est inférieur au premier seuil.
- si le prix d'électricité est inférieur à un seuil, la quantité d'oxygène dans l'air envoyé à l'unité de séparation des gaz de l'air est supérieure à la quantité d'oxygène dans le comburant envoyé de l'unité de séparation des gaz de l'air vers l'unité de combustion.
- si le prix d'électricité est supérieur à un seuil, la quantité d'oxygène dans l'air envoyé à l'unité de séparation des gaz de l'air est inférieure à la quantité d'oxygène dans le comburant envoyé de l'unité de séparation des gaz de l'air vers l'unité de combustion.
- une partie de la quantité d'oxygène dans le comburant est fournie par vaporisation de comburant stocké sous forme liquide.
- si le prix de vente de l'électricité est inférieur à un seuil, on réduit, éventuellement à zéro, la quantité d'air envoyée à l'unité de séparation des gaz de l'air et/ou la quantité de comburant envoyée de l'unité de séparation et/ou la quantité de fumées envoyées à l'unité de compression et/ou de purification .
- si le prix de vente de l'électricité est inférieur à un seuil, l'unité de combustion ne fonctionne pas.
- l'unité de combustion en état de fonctionnement est toujours alimentée par un carburant qui est un combustible carboné.
- l'unité de combustion en état de fonctionnement est toujours alimentée par substantiellement le même combustible carboné, quel que soit le prix de l'électricité.
- l'unité de combustion en état de fonctionnement est toujours alimentée par du charbon.

Par unité de production des gaz de l'air, on entend une unité comprenant l'unité de séparation des gaz de l'air, les différents stockages cryogéniques et les tuyaux nécessaires à son fonctionnement. Cette unité peut opérer par distillation cryogénique.

On entend par unité de combustion par exemple une chaudière ou un incinérateur, de préférence une chaudière à Lit Fluidisé Circulant ou une chaudière à Charbon Pulvérisé.

Par chaudière à lit fluidisé circulant, on entend une chaudière dans lequel le combustible est brûlé en suspension dans l'air ou l'oxygène.

Par chaudière à charbon pulvérisé on entend une chaudière dans lequel le combustible est finement broyé.

Par combustibles carbonés, on entend par exemple le charbon, le lignite, les ordures ménagères, tout combustible issu de la biomasse (débris végétaux, production végétale dédiée à la combustion...).

Par comburant plus pauvre en azote que l'air, on entend un fluide enrichi en oxygène par rapport à l'air, en particulier contenant au moins 60% mol. d'oxygène, de préférence au moins 90% mol. d'oxygène. Un autre comburant, par exemple une partie des fumées peut être envoyé à la CCCC.

L'énergie nécessaire au fonctionnement des différentes unités mises en oeuvre dans le procédé de combustion provient soit de l'unité de production électrique elle-même alimentée au moins partiellement par l'oxygène produit, soit d'une autre unité de production électrique via un réseau de transport de l'électricité, soit par un approvisionnement direct en électricité d'une source renouvelable (panneaux solaires, éoliennes, barrage hydroélectrique, etc...).

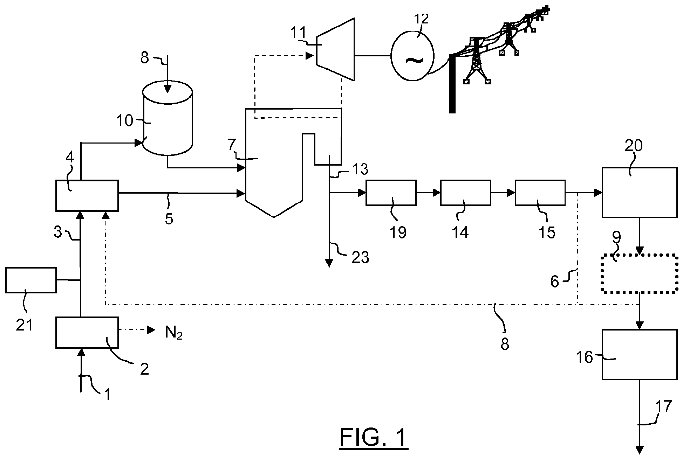

La figure 1 représente un schéma général d'un ensemble capable de fonctionner selon le procédé de l'invention, pour la capture du CO₂, d'une unité de séparation des gaz de l'air, d'une unité de combustion mettant en oeuvre une chaudière à charbon pulvérisé et fonctionnant alternativement à un comburant plus pauvre en azote que l'air et à l'air, et une unité de compression et de purification du CO₂.

Une conduite d'amenée d'air 1 est reliée à l'unité 2 de séparation des gaz de l'air qui est relié à une conduite de production d'oxygène 3. La conduite d'oxygène 3 est relié à un stockage 21 et indirectement à une unité de combustion 7. La conduite d'oxygène est reliée d'abord à un mélangeur 4 permettant le mélange d'oxygène avec une recirculation de CO₂ à travers une conduite 6,18. Une conduite d'amenée de comburant 5 est relié au mélangeur 4 et à la chaudière 7 à charbon pulvérisé.

Une ligne d'arrivée de combustible 8, ici le charbon brut, est reliée à un pulvériseur 10 qui est relié à la chaudière 7 à charbon pulvérisé.

Une conduite de vapeur issue de la chaudière 7 est reliée à une turbine à vapeur 11, qui peut fournir un travail mécanique. Ce travail peut être transformé en énergie à l'aide d'un alternateur 12 pour fournir de l'électricité.

Une conduite de fumées de combustion 13 est reliée à l'unité de dépoussiérage 14, et éventuellement à une unité de désulfurisation 15. Les fumées peuvent être envoyées dans l'unité 20 de compression et/ou de purification (CPU) du CO₂ ou rejetées à l'atmosphère par la conduite 23. L'unité 16 peut être une unité de conditionnement tel qu'une unité de compression et l'unité 9 peut être une unité de pré-traitement.

On distingue cinq modes de fonctionnement de l'ensemble selon le prix de vente et/ou d'achat d'électricité.

### 1) Prix d'électricité très élevée et prix de mise à l'air des fumées de la chaudière bas.

Dans le cas où le prix de l'électricité générée par l'ensemble dépasse un premier seuil et en même temps le prix de la mise à l'air des fumées de la chaudière est inférieur à un deuxième seuil, la chaudière n'est plus alimentée par de l'oxygène mais seulement par de l'air. Dans ce cas, l'appareil de séparation d'air 2 n'est plus alimenté par de l'air et ne produit ni d'oxygène ni d'azote. De même, l'unité CPU 20 ne fonctionne pas et les fumées sont mises à l'air à travers la conduite 23. Cette mode de fonctionnement peut également être mise en route quand le rapport entre le prix de mise à l'air des fumées et le prix de l'électricité générée est dessous d'un troisième seuil. L'unité de compression 16 ne fonctionne pas.

Ici il est plus intéressant de vendre l'électricité qui aurait été consommée par l'appareil de séparation d'air et par l'unité CPU plutôt que de l'utiliser pour faire fonctionner ces dispositifs.

Il est également possible d'arrêter juste l'appareil de séparation d'air en arrêtant d'y envoyer de l'air et de continuer à faire fonctionner l'unité CPU 20 en alimentant la chaudière uniquement avec du comburant stocké.

### 2) Prix de l'électricité élevé

L'appareil de séparation d'air 2 sépare moins d'air qu'il ne produit comme gaz de l'air, une partie des produits provenant de la vaporisation de produits séparés pendant que l'électricité est moins chère.

L'unité CPU 20 est également en marche comme l'unité de compression 16 et la chaudière est alimentée par de l'oxygène.

Dans ce cas, la quantité d'oxygène dans l'air envoyé vers l'appareil de séparation d'air 2 peut être inférieure à la quantité d'oxygène dans le débit 5 envoyé vers la chaudière 7.

### 3) Prix de l'électricité modéré

L'unité CPU 20 est également en marche et la chaudière est alimentée par de l'oxygène.

La chaudière fonctionne à une marche réduite par rapport à celle quand le prix de l'électricité est élevé (cas précédent). L'appareil de séparation d'air sépare moins d'air qu'il ne produit comme gaz de l'air, une partie des produits provenant de la vaporisation de produits séparé pendant que l'électricité est moins chère.

### 4) Prix de l'électricité bas

Dans ce cas, la production d'électricité est modérée. La chaudière 7 est alimentée par de l'oxygène. La chaudière 7 fonctionne avec une marche très réduite, c'est-à-dire à environ 50% par exemple, cette marche étant réduite encore par rapport au cas précédent du prix de l'électricité modéré. Comme la chaudière ne fonctionne pas avec sa production maximale, les fumées produites seront réduites et donc l'unité CPU 20 marche avec une production de CO₂ réduite. L'appareil de séparation d'air 2 sépare plus d'air qu'il ne produit comme gaz de l'air, une partie de l'air séparé étant stockée sous forme liquide.

Dans ce cas, la quantité d'oxygène dans le débit d'air 1 envoyé vers l'appareil de séparation d'air 2 peut être supérieure à la quantité d'oxygène dans le débit 5 envoyé vers la chaudière 7.

### 5) Prix de l'électricité très bas

L'appareil de séparation d'air fonctionne mais ne produit que les produits liquides qui sont envoyés aux stockages ou au stockage s'il n'y a qu'un seul produit. Si le ou les stockages de liquide sont pleins, l'appareil de séparation d'air 2 ne fonctionne pas. L'unité CPU 20 ne fonctionne pas et l'unité de compression 16 et la chaudière 7 non plus.

Quel que soit le prix de l'électricité, si la chaudière fonctionne, elle est alimentée en charbon.

Pour exploiter un réseau de génération d'électricité, il est nécessaire de faire des choix quant aux moyens de génération d'électricité exploitée. Un réseau peut être relié à une première unité opérant selon le procédé décrit ci-dessus où si le prix de vente de l'électricité est très élevé, l'appareil de séparation d'air ne fonctionne pas, la chaudière est alimentée exclusivement par de l'air et les fumées produits sont rejetées à l'atmosphère, libérant une quantité de dioxyde de carbone par heure. Ceci peut être préférable qu'à faire fonctionner une deuxième unité de génération d'électricité libérant à l'atmosphère en marche nominale une quantité donnée de dioxyde de carbone par heure supérieure à celle libérée par la chaudière.

## Revendications

1. Procédé de génération d'électricité par combustion de combustibles carbonés mettant en oeuvre une unité de production de gaz de l'air (2), une unité de combustion de combustibles carbonés (7) avec un premier mode de fonctionnement à l'air où elle est alimentée par de l'air et aucun fluide enrichi en oxygène provenant de l'unité de production et un deuxième mode de fonctionnement à l'oxygène où elle est alimentée uniquement par un comburant plus pauvre en azote et plus riche en oxygène que l'air, ce comburant étant au moins partiellement issu de l'unité de séparation de gaz de l'air , et une unité de compression et/ou de purification du CO₂ (16, 20) issu des fumées de combustion, dans lequel lors du fonctionnement de l'unité de production des gaz de l'air, de l'air est envoyé à l'unité de production des gaz de l'air, lors du fonctionnement de l'unité de combustion et de l'unité de compression et/ou de purification, au moins une partie des fumées de combustion envoyées à l'unité de compression et/ou de purification proviennent de l'unité de combustion, et si le prix de vente de l'électricité générée dépasse un premier seuil et/ou si le prix d'achat de l'électricité consommée par au moins une des unités dépasse un deuxième seuil,on augmente la quantité de fumées envoyées à l'air , **caractérisé en ce que**, si le prix de vente de l'électricité générée dépasse un premier seuil et/ou si le prix d'achat de l'électricité consommée par au moins une des unités dépasse un deuxième seuil, on réduit, possiblement à zéro, la quantité de fumées envoyées à l'unité de compression et/ou de purification, on réduit la quantité d'air envoyée à l'unité de production des gaz de l'air (2) et/ou la quantité de comburant envoyé de l'unité de production des gaz de l'air vers l'unité de combustion et on augmente la quantité d'air envoyé à l'unité de combustion (7).

2. Procédé selon l'une des revendications suivantes dans lequel si le prix de vente de l'électricité générée dépasse le premier seuil et/ou si le prix d'achat de l'électricité consommée par au moins une des unités dépasse le deuxième seuil, on envoie toutes les fumées à l'air.

3. Procédé selon la revendication 2, dans lequel si le prix de vente de l'électricité dépasse le premier seuil, on réduit, éventuellement à zéro, la quantité d'air envoyée à l'unité de production des gaz de l'air (2) et/ou la quantité de comburant envoyée de l'unité de production et l'unité de combustion (7) est alimentée à l'air, ne recevant plus de comburant plus pauvre en azote et plus riche en oxygène que l'air.

4. Procédé selon l'une des revendications précédentes dans lequel on augmente, éventuellement à partir de zéro, la quantité d'air envoyée à l'unité de combustion (7) si le prix de vente de l'électricité est supérieur à un quatrième seuil, qui peut être inférieur, égal ou supérieur au premier seuil, le cas échéant.

5. Procédé selon l'une des revendications 1 à 4, **caractérisé en ce que** l'unité de combustion (7) fonctionne uniquement à l'air si le prix de vente d'électricité dépasse le premier seuil et éventuellement uniquement au comburant plus pauvre en azote que l'air si le prix de vente d'électricité est inférieur au premier seuil.

6. Procédé selon l'une des revendications précédentes dans lequel si le prix d'électricité est inférieur à un seuil, la quantité d'oxygène dans l'air envoyé à l'unité de production des gaz de l'air (2) est supérieure à la quantité d'oxygène dans le comburant envoyé de l'unité de production des gaz de l'air (2) vers l'unité de combustion (7).

7. Procédé selon l'une des revendications précédentes dans lequel si le prix d'électricité est supérieur à un seuil, la quantité d'oxygène dans l'air envoyé à l'unité de production des gaz de l'air (2) est inférieure à la quantité d'oxygène dans le comburant envoyé de l'unité de production des gaz de l'air (2) vers l'unité de combustion (7).

8. Procédé selon la revendication 7 dans lequel une partie de la quantité d'oxygène dans le comburant est fournie par vaporisation de comburant stocké sous forme liquide.

9. Procédé selon l'une des revendications précédentes dans lequel si le prix de vente de l'électricité est inférieur à un seuil, on réduit, éventuellement à zéro, la quantité d'air envoyée à l'unité de production des gaz de l'air (2) et/ou la quantité de comburant envoyée de l'unité de production et/ou la quantité de fumées envoyées à l'unité de compression et/ou de purification (16, 20).

10. Procédé selon la revendication 9 dans lequel si le prix de vente de l'électricité est inférieur à un seuil, l'unité de combustion (7) ne fonctionne pas.

11. Procédé selon l'une des revendications précédentes dans lequel l'unité de combustion (7) en état de fonctionnement est toujours alimentée par un carburant qui est un combustible carboné.

12. Procédé selon la revendication 11 dans lequel l'unité de combustion (7) en état de fonctionnement est toujours alimentée par substantiellement le même combustible carboné, quel que soit le prix de l'électricité.

13. Procédé selon la revendication 12 dans lequel l'unité de combustion (7) en état de fonctionnement est toujours alimentée par du charbon.

## Patentansprüche

1. Verfahren zum Erzeugen von Strom durch Verbrennen von kohlenstoffhaltigen Brennstoffen unter Anwendung einer Produktionseinheit von Gas aus der Luft (2), einer Verbrennungseinheit von kohlenstoffhaltigen Brennstoffen (7) mit einem ersten Betriebsmodus mit Luft, in dem sie mit Luft und keinem mit Sauerstoff angereicherten Fluid aus der Produktionseinheit beschickt wird, und einem zweiten Betriebsmodus mit Sauerstoff, in dem sie nur mit einem Oxidationsmittel beschickt wird, das weniger Stickstoff und mehr Sauerstoff enthält, als die Luft, wobei dieses Oxidationsmittel zumindest teilweise aus der Einheit zum Abscheiden von Gas aus der Luft stammt, und einer Einheit zum Verdichten und/oder Reinigen des CO₂ (16, 20) aus den Rauchgasen der Verbrennung, wobei beim Betrieb der Produktionseinheit von Gas aus der Luft, Luft zur Produktionseinheit von Gas aus der Luft geschickt wird, beim Betrieb der Verbrennungseinheit und der Einheit zum Verdichten und/oder Reinigen, zumindest ein Teil der Rauchgase der Verbrennung, die zur Einheit zum Verdichten und/oder Reinigen geschickt werden, aus der Verbrennungseinheit stammen, und wenn der Verkaufspreis für den erzeugten Strom einen ersten Grenzwert übersteigt, und/oder wenn der Kaufpreis für den durch zumindest eine der Einheiten verbrauchten Strom einen zweiten Grenzwert übersteigt, man die Menge an Rauchgasen, die in die Luft geschickt werden, erhöht, **dadurch gekennzeichnet, dass** wenn der Verkaufspreis für den erzeugten Strom einen ersten Grenzwert übersteigt, und/oder wenn der Kaufpreis für den durch zumindest eine der Einheiten verbrauchten Strom einen zweiten Grenzwert übersteigt, man die Menge an Rauchgasen, die in die Einheit zum Verdichten und/oder Reinigen geschickt werden möglicherweise auf Null reduziert, man die Menge an Luft, die in die Produktionseinheit von Gas aus der Luft (2) geschickt wird und/oder die Menge an Oxidationsmittel , das von der Produktionseinheit von Gas aus der Luft an die Verbrennungseinheit geschickt wird, reduziert und man die Menge an Luft, die in die Verbrennungseinheit (7) geschickt wird, erhöht.

2. Verfahren nach einem der folgenden Ansprüche, wobei, wenn der Verkaufspreis für den erzeugten Strom einen ersten Grenzwert übersteigt und/oder wenn der Kaufpreis für den durch zumindest eine der Einheiten verbrauchten Strom einen zweiten Grenzwert übersteigt, man die gesamten Rauchgase in die Luft schickt.

3. Verfahren nach Anspruch 2, wobei, wenn der Verkaufspreis für den Strom einen ersten Grenzwert übersteigt, man die Menge an Luft, die in die Produktionseinheit von Gas aus der Luft (2) geschickt wird und/oder die Menge an Oxidationsmittel, die von der Produktionseinheit geschickt wird, eventuell auf Null reduziert, und die Verbrennungseinheit (7) mit der Luft beschickt wird und kein Oxidationsmittel mehr erhält, das weniger Stickstoff und mehr Sauerstoff enthält, als die Luft.

4. Verfahren nach einem der vorhergehenden Ansprüche, wobei man die Menge an Luft, die in die Verbrennungseinheit (7) geschickt wird, eventuell ausgehend von Null erhöht, wenn der Verkaufspreis für den Strom über einem vierten Grenzwert liegt, der gegebenenfalls kleiner, gleich oder größer sein kann, als der erste Grenzwert.

5. Verfahren nach einem der Ansprüche 1 bis 4, **dadurch gekennzeichnet, dass** die Verbrennungseinheit (7) nur mit der Luft betrieben wird, wenn der Verkaufspreis für den Strom den ersten Grenzwert übersteigt, und eventuell nur mit dem Oxidationsmittel, der weniger Stickstoff enthält, als die Luft, wenn der Verkaufspreis für den Strom unter dem ersten Grenzwert liegt.

6. Verfahren nach einem der vorhergehenden Ansprüche, wobei, wenn der Preis für den Strom unter einem Grenzwert liegt, die Menge an Sauerstoff in der Luft, die an die Produktionseinheit von Gas aus der Luft (2) geschickt wird, größer ist, als die Menge an Sauerstoff im Oxidationsmittel, das von der Produktionseinheit von Gas aus der Luft (2) zur Verbrennungseinheit (7) geschickt wird.

7. Verfahren nach einem der vorhergehenden Ansprüche, wobei, wenn der Preis für den Strom über einem Grenzwert liegt, die Menge an Sauerstoff in der Luft, die an die Produktionseinheit von Gas aus der Luft (2) geschickt wird, geringer ist, als die Menge an Sauerstoff im Oxidationsmittel, das von der Produktionseinheit von Gas aus der Luft (2) zur Verbrennungseinheit (7) geschickt wird.

8. Verfahren nach Anspruch 7, wobei ein Teil der Menge an Sauerstoff im Oxidationsmittel durch Verdampfen von Oxidationsmittel bereitgestellt wird, das in flüssiger Form gelagert wird.

9. Verfahren nach einem der vorhergehenden Ansprüche, wobei, wenn der Verkaufspreis für den Strom unter einem Grenzwert liegt, man die Menge an Luft, die in die Produktionseinheit von Gas aus der Luft (2) geschickt wird, und/oder die Menge an Oxidationsmittel, das in die Produktionseinheit geschickt wird und/oder die Menge an Rauchgasen, die in die Einheit zum Verdichten und/oder Reinigen (16, 20) geschickt wird, eventuell auf Null reduziert.

10. Verfahren nach Anspruch 9, wobei, wenn der Verkaufspreis für den Strom unter einem Grenzwert liegt, die Verbrennungseinheit (7) nicht in Betrieb ist.

11. Verfahren nach einem der vorhergehenden Ansprüche, wobei die Verbrennungseinheit (7) im Betriebszustand immer mit einem Brennstoff beschickt wird, der ein kohlenstoffhaltiger Brennstoff ist.

12. Verfahren nach Anspruch 11, wobei die Verbrennungseinheit (7) im Betriebszustand unabhängig vom Preis für den Strom immer mit dem im Wesentlichen selben kohlenstoffhaltigen Brennstoff beschickt wird.

13. Verfahren nach Anspruch 12, wobei die Verbrennungseinheit (7) im Betriebszustand immer mit Kohle beschickt wird.

## Claims

1. Method for generating electricity by burning of carbonaceous fuels using an air gas production unit (2), a carbonaceous fuel combustion unit (7), with a first operating mode using air, wherein it is supplied with air and no oxygen-enriched fluid originating from the production unit, and a second operating mode using oxygen wherein it is only supplied with an oxidant with a lower nitrogen content and higher oxygen content than air, this oxidant at least partially originating from the air/gas separation unit, and a CO₂ compression and/or purification unit (16, 20) for the CO₂ derived from the combustion flue gases, wherein during operation of the air gas production unit, air is sent to the air gas production unit, during operation of the combustion unit and the compression and/or purification unit, at least part of the combustion flue gases sent to the compression and/or purification unit originates from the combustion unit, and if the selling price of the electricity generated exceeds a first threshold and/or if the purchasing price of the electricity consumed by at least one of the units exceeds a second threshold, the quantity of the flue gases vented is increased, **characterised in that**, if the selling price of the electricity generated exceeds a first threshold and/or if the purchasing price of the electricity consumed by at least one of the units exceeds a second threshold, the quantity of the flue gases sent to the compression and/or purification unit is reduced, potentially to zero, the quantity of air sent to the air gas production unit (2) is reduced and/or the quantity of oxidant sent from the air gas production unit to the combustion unit is reduced, and the quantity of air sent to the combustion unit (7) is increased.

2. Method according to one of the following claims, wherein if the selling price of the electricity generated exceeds the first threshold and/or if the purchasing price of the electricity consumed by at least one of the units exceeds the second threshold, all flue gases are vented.

3. Method according to claim 2, wherein if the selling price of the electricity exceeds the first threshold, the quantity of air sent to the air gas production unit (2) and/or the quantity of oxidant sent from the production unit is reduced, potentially to zero, and the combustion unit (7) is supplied with air, no longer receiving oxidant that has a lower nitrogen content and a higher oxygen content than air.

4. Method according to one of the previous claims, wherein the quantity of air sent to the combustion unit (7) is increased, potentially from zero, if the selling price of the electricity is greater than a fourth threshold, which can be less than, equal to or greater than the first threshold, where applicable.

5. Method according to one of claims 1 to 4, **characterised in that** the combustion unit (7) operates on air alone if the selling price of the electricity exceeds the first threshold and potentially only on oxidant with a lower nitrogen content than air if the selling price of the electricity is less than the first threshold.

6. Method according to one of the previous claims, wherein if the electricity price is less than a threshold, the quantity of oxygen in the air sent to the air gas production unit (2) is greater than the quantity of oxygen in the oxidant sent from the air gas production unit (2) to the combustion unit (7).

7. Method according to one of the previous claims, wherein if the electricity price is greater than a threshold, the quantity of oxygen in the air sent to the air gas production unit (2) is less than the quantity of oxygen in the oxidant sent from the air gas production unit (2) to the combustion unit (7).

8. Method according to claim 7, wherein part of the quantity of oxygen in the oxidant is provided by the vaporisation of oxidant stored in liquid form.

9. Method according to one of the previous claims, wherein if the selling price of the electricity is less than a threshold, the quantity of air sent to the air gas production unit (2) and/or the quantity of oxidant sent from the production unit and/or the quantity of flue gases sent to the compression and/or purification unit (16, 20) is reduced, potentially to zero.

10. Method according to claim 9, wherein if the selling price of the electricity is less than a threshold, the combustion unit (7) does not operate.

11. Method according to one of the previous claims, wherein the combustion unit (7) in operating state is continuously supplied by a fuel that is a carbonaceous fuel.

12. Method according to claim 11, wherein the combustion unit (7) in operating state is continuously supplied by substantially the same carbonaceous fuel, regardless of the electricity price.

13. Method according to claim 12, wherein the combustion unit (7) in operating state is continuously supplied by coal.
